# EUROPEAN PATENT SPECIFICATION

(11) **EP 4 513 859 B1**
(45) Date of publication and mention of the grant of the patent: **13.08.2025**
(21) Application number: 23193533.9
(22) Date of filing: 25.08.2023
(51) Int. Cl.: H04L 67/12, H04L 9/32, H04W 4/02, H04W 4/029, H04W 4/40, H04W 12/06, G08G 1/00

(54) **METHOD FOR A LOCATION VERIFICATION IN AN INTELLIGENT TRANSPORTATION SYSTEM**
VERFAHREN ZUR STANDORTÜBERPRÜFUNG IN EINEM INTELLIGENTEN TRANSPORTSYSTEM
PROCÉDÉ DE VÉRIFICATION DE LOCALISATION DANS UN SYSTÈME DE TRANSPORT INTELLIGENT

(43) Date of publication of application: 26.02.2025
(73) Proprietor: Deutsche Telekom AG, 53113 Bonn (DE)
(72) Inventor: Sudholt, Frank, Bad Honnef (DE)
(74) Representative: Braun-Dullaeus Pannen Emmerling Patent- & Rechtsanwaltspartnerschaft mbB

(56) References cited:
- WO-A1-2023/150933
- US-A1- 2019 245 831
- US-A1- 2022 358 247

## Description

### TECHNICAL FIELD

The invention relates to a method for a location verification in an intelligent transportation system by broadcasting vehicle to everything (V2X) communication, wherein a number of traffic participants are registered in the intelligent transportation system (ITS), wherein a first traffic participant (VT1) uses a service made available by an application (POS-App) of a provider and wherein the service needs a location verification of the first traffic participant (VT1).

### BACKGROUND

In Intelligent Transportation Systems (ITS), communication between vehicles (classified as vehicle-to-vehicle (V2V)) or communication between vehicles and other traffic participants (vehicle to everything (V2X)) is becoming increasingly important. For many use cases, a direct communication via multicast or broadcast messages is necessary, whereby the authenticity and authorization of the messages as well as the anonymity or data protection of the vehicles are of primary importance. In addition, however, there will also be use cases where mutually authenticated and/or encrypted communication between two or a defined group of vehicles is also important.

Currently, there are numerous activities in standardization committees, industry committees, official/political institutions, etc. to specify such an Intelligent Transportation System and to expedite their widespread implementation. Vehicle-to-everything (V2X) communication is an important component of this, and "cellular"/mobile-based V2X communication is considered in this application.

3GPP has standardized LTE-based V2X communication services in Rel. 14. The standards are being further developed for 5G as the latest mobile communications generation, which not only supports the existing use cases. 5G and later generations V2X communications will offer new application possibilities for V2X services, e.g. through even lower latency, higher data rates or greater reliability. Tus this invention is not limited to the current mobile communications generation.

V2X communication in intelligent transportation systems offers the standardised possibility that traffic participants (VT) in the intelligent transportation system can communicate directly with each other without involving the mobile radio infrastructure. The relevant V2X architecture has been standardised with 3GPP TS 23.285 V16.4.0 "Architecture enhancements for V2X services". The V2X-communication without involving the mobile radio infrastructure, like the V2X unmanaged mode 4 in LTE named PC5 Sidelink, is addressed in this application as broadcasting, whereby such broadcasted V2X-messages have a limited range (max. approx. 400m). Anonymized certificates can be used for the V2X-communication, i.e. it is ensured that the messages are sent by authorized VT in the ITS, whereby the identity of the sender must not be determined.

There are use cases for traffic participants (VTs) where they need or want to prove their current location or their location at a certain point in time to a "location verification" application, e.g. a service of an official entity, an insurance company, other VTs, etc.. In doing so, the service categorically does not trust the VT when he submits his location without any proof.

Document US 2022/358247 A1 discloses gathering group information with data relating to location and time and sending it to a server. Document US 2019/245831 A1 discloses attributing certificates to the vehicles with the effect of securing the communications among said vehicles. Document WO 2023/150933 A1 uses a device gateway to authenticate the location information.

### SUMMARY OF THE INVENTION

It is an object of the present invention to provide a method for verifying a location of a traffic participant (VT) in an intelligent transportation system. A basic idea of the invention is to create an method where neither the service who requests the location verification nor the application (POS-App) which provides the service to the traffic participant (VT) have to trust the traffic participant (VT).

To achieve this object the present invention defines a method according to claim 1. The key features of the inventive method according to claim 1 are, that
- the first traffic participant (VT1) broadcasts a vehicle to everything (V2X) message with a location verification request and a message-ID (ID),
- at least one second traffic participant (VTx) receives the message broadcasted by the first traffic participant (VT1),
- the second traffic participant (VTx) generates data for a location verification of the first traffic participant (VT1), the data include the message-ID (ID), a location information of the second traffic participant (POS_VTx) and a time information (t_VTx),
- the second traffic participant (VTx) signs the data with his VTx-certificate (Cert_VTx) provided in the intelligent transportation system (ITS),
- the second traffic participant (VTx) broadcasts an answer (N-VTx) to the location verification request of the first traffic participant (VT1), including the data, the signature (SIG_VTx) of the data and the VTx-certificate (Cert_VTx) of the second traffic participant (VTx),
- the first traffic participant (VT1) receives the answer (N-VTx) broadcasted by the second traffic participant (VTx),
- the first traffic participant (VT1) sends the answer (N-VTx) of the second traffic participant (VTx) via mobile radio to the application (POS-App) of the provider and
- the application (POS-App) of the provider receives the answer (N-VTx) of the second traffic participant (VTx) sent by the first traffic participant (VT1) and the location position of the first traffic participant (VT1) is verificated by evaluating the answer (N-VTx) of the second traffic participant (VTx).

Due to these key features the first traffic participant (VT1) can proof his location without been trusted by the application or the service he wants to use. When required or requested, the VT1 makes a location verification request within an ITS by means of a V2X broadcast message, e.g. using the PC5 sidelink. Therefore, a function/service has to be implemented in the ITS that supports the V2X broadcast requests and answers with this functionality. If necessary, this function/service must be introduced in the ITS.

A second traffic participant VTx who is within the range of the V2X broadcasted message, which is approximately 400m, then sends a corresponding answer. This response is also send by means of a V2X broadcast message, e.g. PC5 sidelink. The answer of the VTx contains the ID as a reference to the location verification request as well as the current location of the VTx and the current time information. The VTx signs this message with the key of his certificate in the ITS. Since V2X anonymized certificates are used, the VTx remains anonymous.

The VTx also sends his signature and certificate in the V2X answer message. After receiving the answer N-VTx, the VT1 can now send the answer of the VTx via the application to the service. The application POS-App provides a mobile network interface for access to the service, which could be a web application. The POS-App is possibly a part of a broader application of a provider.

Thus, a key feature of this method is that the verifier of the location of VT1 only must verify the signatures with the supplied certificates and therefore does not have to be registered in the ITS and does not even need a connection to the ITS. However, the ITS may only offer the service to registered applications with appropriate commercial agreements. This, and ensuring that only registered applications can use the service, if applicable, are out-of-scope of this invention.

The service can use the certificate of the VTx to verify that the information sent by the VTx are valid. If the verification is successful, the VT1 must be within the range of a message broadcasted by the VTx at the time information submitted by the VTx. To verify that the VT1 is in a certain time in the range of the message broadcasted by a VTx, which is as said above approximately 400m, only the broadcasted message of one VTx is sufficient.

Therefore, a location verification of the VT1 means that an area is determined in which the VT1 is located at a certain time. The range of the broadcasted answer of the VTx limits this area. If several VTx respond, the service can even determine the location of VT1 more precisely, especially when the time information sent by the several VTs lie in a short period of time. This preferred embodiment of the invention will be described in more detail later.

Any traffic participant VT named in this application communicates through a device. This device could be a device used by a person who participates in traffic, a device used by a vehicle or a device of an infrastructure (V2I communication). The device is able to communicate via "cellular"/mobile-based V2X infrastructure and to broadcast and/or receive messages via V2X-communication without involving the mobile radio infrastructure.

In a preferred embodiment of this invention, the application POS-App sends a location verification inquiry to the first traffic participant VT1. Thus, the location verification is only performed, when the application, e.g. triggered by the service, sends an inquiry. This contributes to data economy of the communication.

In another preferred embodiment, a challenge CH is sent along with the location verification inquiry. This challenge could be used for identifying the response to the location verification inquiry. Any indicator of the inquiry, e.g. a random number, could be used to identify the challenge.

Preferably, the first traffic participant VT1 broadcasts the challenge CH together with the location verification request and the broadcasted answer N-VTx of the second traffic participant VTx includes the challenge CH. This allows a better assignment of the several steps of the inventive method.

In an advantageously embodiment, the first traffic participant VT1 broadcasts the challenge CH as the message-ID (ID). In other words, the challenge CH is used as the ID for the location verification request, so that less data must be transmitted.

In a preferred embodiment, the first traffic participant VT1 sends his own time information t_VT1 and/or his own location information POS_VT1 together with the answer N-VTx to the application POS-App. Thus, the service receives a concrete location information, which may be trusted, when it is in the range verified by the answer N-VTx of the VTx.

Preferably, the time information t_VT1 of the first traffic participant VT1 and/or the time information t_VTx of the second traffic participant VTx is a time stamp. Such a time stamp enables the service to narrow the location of the VT1 more precisely.

In a very preferred embodiment answers N-VTa, N-VTb, N-VTc of a plurality of second traffic participants, here described as VTa, VTb and VTc are available and evaluated to verify the location of the first traffic participant VT1. Since the ranges of the answers are overlapping, this intersection is the area where the VT1 has his location at a certain time. Therefore, this embodiment allows to significantly narrowing down the area of location of the VT1, too. Thus, the inventive method is not limited to a specific number of second traffic participants.

In an advantageously embodiment, the evaluation of the location of the first traffic participant VT1 uses mathematical methods, based e.g. on the number of responses and/or the distribution of the positions of the other traffic participants, to further narrow down the location of the first traffic participant VT1. This feature allows to further narrowing down the area of location of the VT1.

Preferably, the location of the first traffic participant VT1 is evaluated by the application POS-App or by the service. In principle, the verification could be performed by the application, the service or another entity. If the application POS-App or the service verify the location of the VT1, time delay could be minimised.

### DESCRIPTION OF THE FIGURES

A preferred embodiment of this invention is described in more detail. The two figures related to this preferred embodiment show some of the basic features of claim 1 together with some preferred features. However, the joint description of the preferred features shown in this embodiment do not restrict the specified basic features.
Figure 1 shows features of the technical process related to this invention in form of a diagram, together with the preconditions and a trigger of the inventive method.
Figure 2 shows a narrowing of the area of location for the VT1 based on the conditions shown with figure 1.

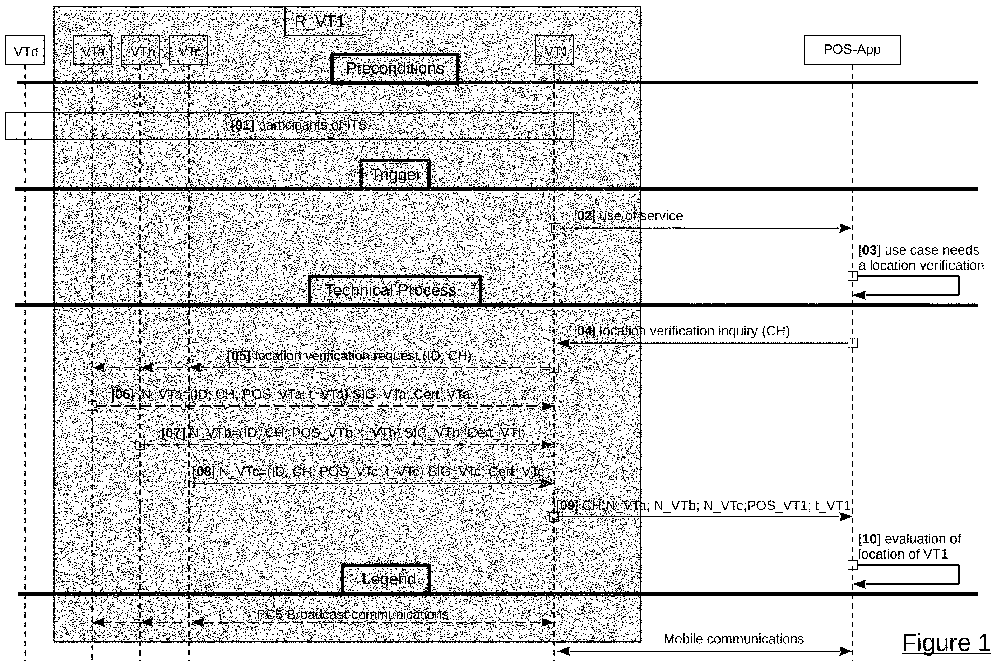

At the bottom of figure 1 a legend explains that broken arrows show broadcast communication of the VTs which does not use the mobile infrastructure and continuous arrows show the communication between the VT1 and the POS-App via mobile radio.

As described before the method is not limited to a certain number of second traffic participants VTx. Figure 1 shows a plurality of traffic participants VT1, VTa, VTb, VTc and VTd registered in an ITC marked with the serial number [01]. A grey section R_VT1 displays the range of the request broadcasted by VT1.

In this embodiment, three of the second traffic participants VTa, VTb and VTc are located within the range of the broadcasted request. The fourth of the second traffic participants VTd does not receive the broadcast from VT1 as he is out of range.

The trigger for the process is set by VT1 who wants to use a service (arrow with serial number [02]) that is provided via a POS-App of a provider. The provider of the service or the POS-App determines that location verification is required (arrow with serial number [03]).

The technical process includes the following steps shown with arrows marked with the following serial numbers:
[04]: The POS app sends VT1 a location inquiry, e.g. via mobile radio, here with a challenge CH to ensure the query is up-to-date.
[05] The VT1 sends a "location verification" V2X broadcast message with CH and a message-ID (ID) to associate the later received answers.

The three second traffic participants VTa, VTb and VTc, which are in the range of the broadcast receive the request sent in [05]. Each of them generates, especially automatically, an answer as shown with arrows [06] - [08]. The answer includes the message-ID, the CH as well as the current location POS_VTa, POS_VTb or POS_VTc of the relevant second traffic participant VTa, VTb or VTc and the related current time stamp t_VTa, t_VTb or t_VTc.

This data is signed by the relevant second traffic participant with his certificate SIG_VTa, SIG_VTb or SIG_VTc as registered in the ITS. Every of the three answers N_VTa, N_VTb and N_VTc contains the data of the relevant VTx, his signature SIG_VTx and his VTx certificate Cert_VTx and is sent as a V2X broadcast message.

After VT1 receives the answers sent in [06] - [08], VT1 sends the three answers of the location request to the POS-App via mobile radio. While in the present embodiment three answers were transmitted, in general this communication must contain at least one answer N_VTx for the function of the method.

Optionally, VT1 may also send its own location and/or timestamp if it makes sense for the use case.

In [10] the POS-App verifies the three SIG_VTx signatures with Cert_VTx. Based on the POS_VTx, the POS-App can verify the POS_VT1 location or check its plausibility. If needed, the POS-App as well as the service can also verify the location of VT1 based on the POS_VTx more precisely.

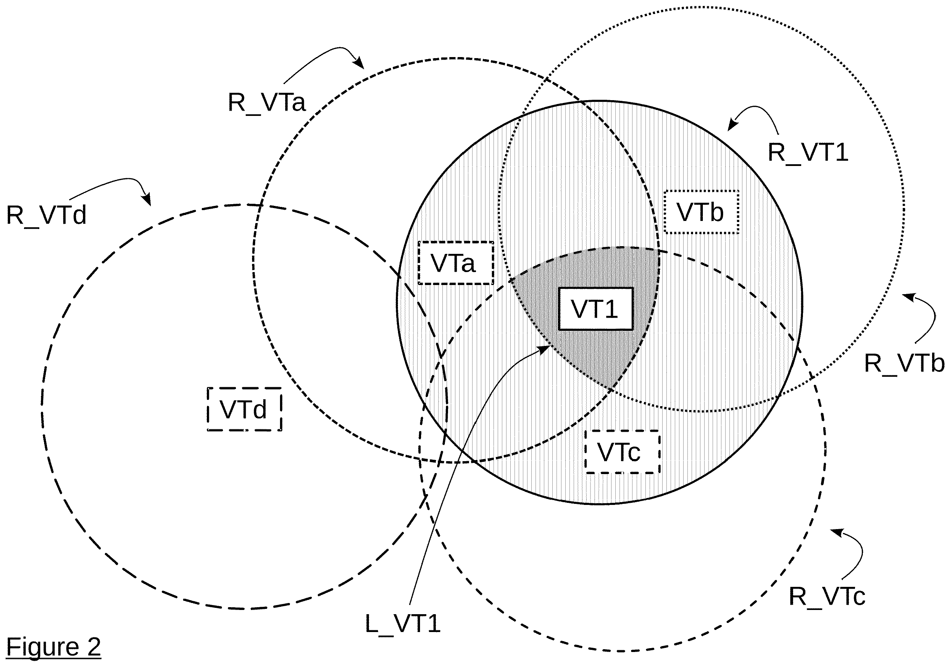

Figure 2 shows schematically the closer surroundings around a VT1 as described in figure 1. At the certain time four VTx, namely VTa, VTb, VTc and VTd are positioned in the surroundings of VT1. Each of the VTs is the center of a circle, which shows the possible range for his broadcasted messages, e.g. the second traffic participant VTb is surrounded by the circle with the range R_VTb.

VTa, VTb and VTc are in the range of a message broadcasted by VT1, which is shown by the hatch surrounded by R_VT1. VTd is out of range for this message and therefore not able to receive it. Thus, VT1 is able to receive answers from VTa, VTb and VTc to his location request. Since the circles R_VTa, R_VTb and R_VTc form a grey intersection, this intersection could be determined as the narrowed location L_VT1 of VT1.

## Claims

1. Method for a location verification in an intelligent transportation system, ITS, by broadcasting vehicle to everything, V2X, communication, wherein a number of traffic participants are registered in the intelligent transportation system, ITS, wherein a first traffic participant, VT1, uses a service made available by an application, POS-App, of a provider and wherein the service needs a location verification of the first traffic participant, VT1, said method comprising steps in that:
- the first traffic participant, VT1, broadcasts a vehicle to everything, V2X, message with a location verification request and a message-ID, ID,
- at least one second traffic participant, VTx, receives the message broadcasted by the first traffic participant, VT1,
- the second traffic participant, VTx, generates data for an location verification of the first traffic participant, VT1, the data include the message-ID, ID, a location information of the second traffic participant, POS_VTx, and a time information, t_VTx,
- the second traffic participant, VTx, signs the data with his VTx-certificate, Cert_VTx, provided in the intelligent transportation system, ITS,
- the second traffic participant, VTx, broadcasts an answer, N-VTx, to the location verification request of the first traffic participant, VT1, including the data, the signature, SIG_VTx, of the data and the VTx-certificate, Cert_VTx, of the second traffic participant, VTx,
- the first traffic participant, VT1, receives the answer. N-VTx, broadcasted by the second traffic participant, VTx,
- the first traffic participant, VT1, sends the answer, N-VTx, of the second traffic participant, VTx, to the application, POS-App, of the provider and
- the application, POS-App, of the provider receives the answer, N-VTx, of the second traffic participant, VTx, sent by the first traffic participant, VT1, and the location position of the first traffic participant, VT1, is verificated by evaluating the answer, N-VTx, of the second traffic participant, VTx.

2. Method according to claim 1,
**wherein**
the application, POS-App, sends a location verification inquiry to the first traffic participant, VT1.

3. Method according to claim 2,
**wherein,**
a challenge, CH, for identifying the response to the location verification inquiry is sent along with the location verification inquiry.

4. Method according to claim 3,
**wherein,**
the first traffic participant, VT1, broadcasts the challenge, CH, together with the location verification request and the broadcasted answer, N-VTx, of the second traffic participant, VTx, includes the challenge, CH.

5. Method according to claim 3,
**wherein,**
the first traffic participant, VT1, broadcasts the challenge, CH, as the message-ID, ID.

6. Method according to any of claims 1 to 5,
**wherein,**
the first traffic participant, VT1, sends his own time information, t_VT1, and/or his own location information, POS_VT1, together App. with the answer, N-VTX, to the application, POS-

7. Method according to any of claims 1 to 6,
**wherein,**
the time information, t_VT1, of the first traffic participant, VT1, and/or the time information, t_VTx, of the second traffic participant, VTx, is a time stamp.

8. Method according to any of claims 1 to 6,
**wherein,**
answers, N-VTa, N-VTb, N-VTc, of a plurality of second traffic participants, VTa, VTb, VTc, are evaluated to verify the location of the first traffic participant, VT1.

9. Method according to claim 8,
**wherein,**
the evaluation of the location of the first traffic participant, VT1, uses mathematical methods, based e.g. on the number of responses and/or the distribution of the positions of the other traffic participants, to further narrow down the location of the first traffic participant, VT1.

10. Method according to any of claims 1 to 9,
**wherein,**
the location of the first traffic participant, VT1, is evaluated by the application, POS-App, or by the service.

## Patentansprüche

1. Verfahren für eine Standortverifizierung in einem intelligenten Verkehrssystem, ITS, durch Rundsenden einer V2X-, Fahrzeug-an-alles-, Übertragung, wobei in dem intelligenten Verkehrssystem, ITS, eine Anzahl von Verkehrsteilnehmern registriert sind, wobei ein erster Verkehrsteilnehmer, VT1, einen von einer Applikation, POS-App, eines Anbieters verfügbar gemachten Dienst benutzt und wobei der Dienst eine Standortverifizierung des ersten Verkehrsteilnehmers, VT1, benötigt, wobei das Verfahren Schritte umfasst, bei denen:
- der erste Verkehrsteilnehmer, VT1, eine V2X-, Fahrzeug-an-alles-, Nachricht mit einer Standortverifizierungsanforderung und einer Nachrichten-ID, ID, rundsendet,
- mindestens ein zweiter Verkehrsteilnehmer, VTx, die von dem ersten Verkehrsteilnehmer, VT1, rundgesendete Nachricht empfängt,
- der zweite Verkehrsteilnehmer, VTx, Daten für eine Standortverifikation des ersten Verkehrsteilnehmers, VT1, generiert, wobei die Daten die Nachrichten-ID, ID, eine Standortinformation des zweiten Verkehrsteilnehmers, POS_VTx, und eine Zeitinformation, t_VTx, umfassen,
- der zweite Verkehrsteilnehmer, VTx, die Daten mit seinem in dem intelligenten Verkehrssystem, ITS, bereitgestellten VTx-Zertifikat, Cert_VTx, signiert,
- der zweite Verkehrsteilnehmer, VTx, eine Antwort, N-VTx, auf die Standortverifizierungsanforderung des ersten Verkehrsteilnehmers, VT1, rundsendet, die die Daten, die Signatur, SIG_VTx, der Daten und das VTx-Zertifikat, Cert_VTx, des zweiten Verkehrsteilnehmers, VTx, umfasst,
- der erste Verkehrsteilnehmer, VT1, die von dem zweiten Verkehrsteilnehmer, VTx, rundgesendete Antwort, N-VTx, empfängt,
- der erste Verkehrsteilnehmer, VT1, die von dem zweiten Verkehrsteilnehmer, VTx, rundgesendete Antwort, N-VTx, an die Applikation, POS-App, des Anbieters sendet und
- die Applikation, POS-App, des Anbieters die von dem ersten Verkehrsteilnehmer, VT1, gesendete Antwort, N-VTx, des zweiten Verkehrsteilnehmers, VTx, empfängt, und die Standortposition des ersten Verkehrsteilnehmers, VT1, durch Auswerten der Antwort, N-VTx, des zweiten Verkehrsteilnehmers, VTx, verifiziert wird.

2. Verfahren nach Anspruch 1, wobei die Applikation, POS-App, eine Standortverifizierungsanfrage an den ersten Verkehrsteilnehmer, VT1, sendet.

3. Verfahren nach Anspruch 2, wobei zusammen mit der Standortverifizierungsanfrage eine Challenge, CH, zum Identifizieren der Antwort auf die Standortverifizierungsanfrage gesendet wird.

4. Verfahren nach Anspruch 3, wobei der erste Verkehrsteilnehmer, VT1, die Challenge, CH, zusammen mit der Standardortverifizierungsanforderung rundsendet und die rundgesendete Antwort, N-VTx, des zweiten Verkehrsteilnehmers, VTx, die Challenge, CH, umfasst.

5. Verfahren nach Anspruch 3, wobei der erste Verkehrsteilnehmer, VT1, die Challenge, CH, als die Nachrichten-ID, ID, rundsendet.

6. Verfahren nach einem der Ansprüche 1 bis 5, wobei der erste Verkehrsteilnehmer, VT1, zusammen mit der Antwort, N-VTx, seine eigenen Zeitinformationen, t_VT1, und/oder seine eigenen Standortinformationen, POS_VT1, an die Applikation, POS-App, sendet.

7. Verfahren nach einem der Ansprüche 1 bis 6, wobei es sich bei den Zeitinformationen, t_VT1, des ersten Verkehrsteilnehmers, VT1, und/oder den Zeitinformationen, t_VTx, des zweiten Verkehrsteilnehmers, VTx, um einen Zeitstempel handelt.

8. Verfahren nach einem der Ansprüche 1 bis 6, wobei Antworten, N-VTa, N-VTb, N-VTc mehrerer zweiter Verkehrsteilnehmer, VTa, VTb, VTc, evaluiert werden, um den Standort des ersten Verkehrsteilnehmers, VT1, zu verifizieren.

9. Verfahren nach Anspruch 8, wobei die Evaluierung des Standorts des ersten Verkehrsteilnehmers, VT1, mathematische Methoden basierend z. B. auf der Anzahl von Antworten und/oder der Verteilung der Positionen der anderen Verkehrsteilnehmer verwendet, um den Standort des ersten Verkehrsteilnehmers, VT1, weiter einzugrenzen.

10. Verfahren nach einem der Ansprüche 1 bis 9, wobei der Standort des ersten Verkehrsteilnehmers, VT1, durch die Applikation, POS-App, oder durch den Dienst evaluiert wird.

## Revendications

1. Procédé de vérification de localisation dans un système de transport intelligent, ITS, en diffusant une communication véhicule-tout, V2X, dans lequel plusieurs participants au trafic sont enregistrés dans le système de transport intelligent, ITS, dans lequel un premier participant au trafic, VT1, utilise un service mis à disposition par une application, POS-App, d'un fournisseur et dans lequel le service nécessite une vérification de localisation du premier participant au trafic, VT1, ledit procédé comprenant les étapes suivantes :
- le premier participant au trafic, VT1, diffuse un message véhicule-tout avec une demande de vérification de localisation et un identifiant de message, ID,
- au moins un deuxième participant au trafic, VTx, reçoit le message diffusé par le premier participant au trafic, VT1,
- le deuxième participant au trafic, VTx, génère des données pour une vérification de localisation du premier participant au trafic, VT1, les données comprennent l'ID de message, ID, une information de localisation du deuxième participant au trafic, POS_VTx, et une information temporelle t_VTx,
- le deuxième participant au trafic, VTx, signe les données avec son certificat VTx, Cert_VTx, fourni dans le système de transport intelligent, ITS,
- le deuxième participant au trafic, VTx, diffuse une réponse N-VTx à la demande de vérification de localisation du premier participant au trafic, VT1, comprenant les données, la signature SIG_VTx des données et le certificat VTx, Cert_VTX, du deuxième participant au trafic, VTx,
- le premier participant au trafic, VT1, reçoit la réponse, N-VTx, diffusée par le deuxième participant au trafic, VTx,
- le premier participant au trafic, VT1, envoie la réponse, N-VTx, du deuxième participant au trafic, VTx, à l'application POS-App, du fournisseur et
- l'application POS-APP du fournisseur reçoit la réponse N-VTx, du deuxième participant au trafic VTX, envoyée par le premier participant au trafic, VT1, et la position de localisation du premier participant au trafic, VT1, vérifiée en évaluant la réponse, N-VTx, du deuxième participant au trafic , VTx.

2. Procédé selon la revendication 1, dans lequel l'application, POS-APP, envoie une requête de vérification de localisation au premier participant au trafic, VT1.

3. Procédé selon la revendication 2, dans lequel un défi, CH, permet d'identifier la réponse à la requête de vérification de localisation envoyée conjointement à la requête de vérification de localisation.

4. Procédé selon la revendication 3, dans lequel le premier participant au trafic, VT1, diffuse le défi, CH, conjointement à la requête de vérification de localisation et la réponse diffusée N-Vtx, du deuxième participant au trafic, VTx inclut le défi CH.

5. Procédé selon la revendication 3, dans lequel le premier participant au trafic, VT1, diffuse le défi, CH, comme l'identifiant de message, ID.

6. Procédé selon une quelconque des revendications 1 à 5, dans lequel le premier participant au trafic, VT1, envoie ses propres informations temporelles, t_VT1, et/ou ses propres informations de localisation, POS_VT1, conjointement à la réponse, N-VTx, à l'application, POS-App.

7. Procédé selon une quelconque des revendications 1 à 6, dans lequel les informations temporelles t_VT1, du premier participant au trafic, VT1, et/ou les informations temporelles, t_VTx, du deuxième participant au trafic, vTX, constituent un horodatage.

8. Procédé selon une quelconque des revendications 1 à 6, dans lequel les réponses, N-VTa, N-VTb, N-VTc, d'un deuxième participant au trafic, VTa, VTb, VTc, permettent de vérifier la localisation du premier participant au trafic, VT1.

9. Procédé selon la revendication 8, dans lequel l'évaluation de la localisation du premier participant au trafic, VT1, utilise des méthodes mathématiques, basées par exemple sur le nombre de réponses et/ou la distribution des positions des autres participants au trafic, pour affiner davantage la localisation du premier participant au trafic, VT1.

10. Procédé selon une quelconque des revendications 1 à 9, dans lequel la localisation du premier participant au trafic, VT1, est évaluée par l'application, POS-App, ou par le service.
